(19) **Europäisches Patentamt**

**European Patent Office**

**Office européen des brevets**

(11) **EP 1 610 232 A1**

(12) **EUROPEAN PATENT APPLICATION**

(43) Date of publication:
28.12.2005 Bulletin 2005/52

(51) Int Cl.⁷: **G06F 17/30**, G06K 7/00

(21) Application number: **04014443.8**

(22) Date of filing: **21.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicant: **SAP AG**<br>**69190 Walldorf (DE)**<br><br>(72) Inventors:<br>• **Muehl, Gordon**<br>**76684 Östringen (DE)** | • **Hinrichs, Karsten**<br>**67067 Ludwigshafen (DE)**<br>• **Staeck, Jens**<br>**69207 Sandhausen (DE)**<br><br>(74) Representative: **Cohausz & Florack**<br>**Patent- und Rechtsanwälte**<br>**Bleichstrasse 14**<br>**40211 Düsseldorf (DE)** |

(54) **Accessing data tags using database queries**

(57)     A computer-implemented method for mapping data between a wirelessly accessible data carrier and a database application using a mapping interface. To allow device-independent mapping of data and being flexible with respect to changes in the data format, the following is provided communicating with the data carrier via a wireless interface using a data carrier query protocol: communicating with a database application via a database interface using a database query protocol; reading a mapping definition; exchanging data between the wireless interface and the database interface by mapping between the data carrier query protocol and the database query protocol within the mapping interface using the mapping definition; and storing the mapping definition separately from the mapping interface, providing separation between mapping interface and mapping definition.

Fig. 9

EP 1 610 232 A1

**Description**

FIELD OF THE INVENTION

The present invention relates to data processing by digital computer, and more particularly to interfaces for exchanging data.

The invention relates to a computer-implemented method for mapping data between a wirelessly accessible data carrier, and a database application using a mapping interface, comprising communicating with the data carrier via a wireless interface using a data carrier query protocol, communicating with a database application via a database interface using a database query protocol, and reading a mapping definition.

The invention also relates to a computer system for mapping data between a wirelessly accessible data carrier and a database application, the system comprising a wirelessly accessible data carrier, a mapping device with a mapping interface, a wireless interface for communicating with the data carrier using a data carrier query protocol, and a database interface for communicating with a database application using a database query protocol.

The invention also relates to a computer program product readable by a computer and embodying a program of instructions capable of mapping data between a wirelessly accessible data carrier and a database application using a mapping interface, the program comprising instructions operable to cause the computer to perform communicating with the data carrier via a wireless interface using a data carrier query protocol, communicating with a database application via a database interface using a database query protocol, and reading a mapping definition.

Various applications, including enterprise resource planning (ERP), customer relationship management (CRM), and product lifecycle management (PLM), as well as various other business systems, often store their data in databases. To access the data, standardized interfaces with standardized database query protocols are defined. One possible protocol may be the structured query language (SQL), which is compliant with standards defined by the American National Standards Institute and the International Organization for Standardization..

An application can usually access the data stored in a database by sending, to a database interface, query messages (i.e., queries) that comply with the database query protocol supported by the interface. In response to receiving a query, the database interface can cause a database management system to initiate a search of the database for data matching criteria specified by the query. After such data is located and retrieved, it is sent via the database interface to the application.

By implementing the database interface, data storage operations and data location are usually transparent to the application. Changes within the database generally do not affect the database interface, and changes within the database structure generally do not affect applications that use the database.

Some applications, for example, product life cycle management and supply chain management applications, include functions for managing real world objects. Managing real world objects can include, for example, their tracking and identification. The real world objects being managed can include a data tag that is physically attached to the object. In general, the data tag is a data carrier that stores wirelessly accessible data. The data tag can be, for example, a smart tag and, more particularly, an RFID tag, which is a smart tag that uses RFID (i.e., radio frequency identification) technology. Data on the data tag can include information relevant to the management of the real word object. The application can exchange data with the data tag by, for example, radio frequency, microwave, infrared, or any other wireless technology. The exchange can be implemented by using any known wireless communication protocol, for example, ISO standard 15961 or ISO standard 15962, Bluetooth, Wireless Local Area Networks (W-LAN), or any other wireless communication protocol. Different data tags can and typically use different wireless technologies and wireless protocols.

One possible technology used to store and access information directly is radio frequency identification (RFID). This technology may be implemented on real world objects with low cost. As position and other information about real world objects may be required within more and more business applications, access to the tags should be provided. As there is no common standard for different tag technologies, the business applications need to implement a dedicated interface for each of the different tags. These dedicated interfaces may implement a common wireless communication protocol standard. Different tags supporting different communication protocols may still require dedicated implementations.

For instance, implementing different interfaces for accessing different wireless accessible data carriers for applications, which already provide access to databases using standard database query protocols, is inefficient and expensive. One drawback of current systems is the lack of a common standard for accessing data within databases as well as data within mobile data carriers.

SUMMARY

To overcome these problems, the invention provides according to embodiments a computer-implemented method for mapping data between a wirelessly accessible data carrier and a database application using a mapping interface, comprising communicating with the data carrier via a wireless interface using a data carrier query protocol, communicating with a database application via a database interface using a database query protocol, reading a mapping definition, exchanging data between the wireless interface and the database interface by mapping between the data carrier query protocol and the database query protocol within the mapping interface using the mapping definition, and storing the mapping definition separately from the mapping interface, providing separation between mapping interface and mapping definition.

The wirelessly accessible data carrier may be placed on a real world object and may carry data about these objects.

These objects may, for instance, be labels for products, identification cards, access cards, transportation tickets, event tickets, vehicles, machines, materials or any other real world objects, for which data needs to be processed within an application.

The invention can be implemented to realize one or more of the following advantages. A system in accordance with the invention provides a generic and extensible interface for exchanging data between smart tags and databases. Mapping definitions that map byte-oriented data of data tags to field-oriented data of databases (and vice versa) are not hard coded in the interface. Consequently, the mapping definitions can be changed without requiring the reprogramming of the interface or developing of a new interface. Furthermore, new mapping definitions for new types of tags and databases can be added to current mapping definitions without requiring a reprogramming of the interface or a developing a new interface. The system can support different versions of mapping definitions and, thus, can support more than one version of one type of data tag. The interface can be implemented on a front end or a client computing device, including, for example, a portable computing device (e.g., a portable digital assistant). The interface can support mobile applications, i.e., applications that run on portable computing devices. One implementation of the invention provides all of the above advantages.

Communication with the data carrier may be carried out wirelessly via a wireless interface, using any wireless communication protocol, such as ISO 15961, ISO 15962, IRDA, Bluetooth, W-LAN, or any other wireless communication protocol. Messages on the wireless interface may follow a data carrier query protocol. The data carrier query protocol may be any protocol, which is supported by the respective data carrier. The data within the data carrier may be accessed using the data carrier query protocol messages. These messages may adhere to ISO 15961, or ISO 15962, or any other protocol available for accessing wireless data carriers.

According to embodiments, the mapping interface may provide a database interface. The database interface may be accessed by database applications, such as any business applications, which need access to data, using database query protocol messages. The database query protocol messages may be implemented in any database query protocol, such as, for example, structured query language (SQL) protocol, or any other database query protocol.

To enable accessing data on the data carrier using database queries sent to the database interface, embodiments provide mapping between the database queries and the wireless interface queries. To that end, reading a mapping definition is provided. The mapping definition may define how to map messages between the data carrier query protocol and the database query protocol. By mapping these messages, data may be exchanged between the wireless interface and the database interface. Mapping allows accessing the data within the data carriers using database query protocol messages sent to the database interface.

Embodiments provide mapping these messages to data carrier query protocol messages and sending the messages in the correct format to the data carrier via the wireless interface. A data carrier may respond to such a message with the respective data. This data may be in the data carrier query protocol format. Data from the data carrier is received via the wireless interface and may be mapped onto the database query protocol. Sending the data via the database interface as a database query protocol message to the requesting application may be provided.

To allow accounting for different kinds of data carriers and different kinds of data carrier protocols, and to separate the mapping definition from the mapping interface, embodiments provide storing the mapping definition separately from the mapping interface, providing separation between mapping interface and mapping definition. In case different data carriers are used, the mapping definition may be exchanged without changing the mapping interface. This reduces implementation costs. When changing a supported data query protocol, only the mapping definition must be modified. The mapping interface may remain unchanged.

The mapping definition is easily accessible, as it may be stored separately from the mapping interface. The source code of the mapping interface need not be modified when changing the mapping definition. Therefore, implementation time and costs may be reduced when implementing a new or changed data carrier query protocol.

To allow providing mapping definitions dynamically according to the interrogated data carrier, embodiments provide storage of the mapping definition within the data carrier. In case the mapping definition is stored within the data carrier itself, the data carrier may already comprise all information needed to map the data from the data carrier to database query messages and vice versa. It is then only necessary to read the mapping definition from the data carrier according to a common standard. In such a case, the mapping interface needs only to implement reading the mapping definition from the data carrier. The mapping interface may allow mapping database query messages to data carrier query messages, and vice versa.

Embodiments provide storing mapping definitions in a separate memory area of the data carrier. This area may, for instance, be write-protected. Access to the particular memory area may be granted to any requesting program whereas access to different data on the data carrier may be read/write-protected.

According to further embodiments, storing the mapping definition in a file is provided. Developers may access the file to change the mapping definition in case such a change is required. This might be necessary after the data carrier query protocol or the database query protocol has changed. Different files for accessing different types of data carriers may be provided. The mapping interface may in such a case access the appropriate file for mapping data from the particular data carrier to the database interface.

According to further embodiments, it is provided to store various mapping definitions representing different types of data carriers within the file. One file may comprise different mapping definitions for different kinds of data carriers. When accessing the file via the mapping interface, the type of data carrier, which may already be identified via the wireless interface, may determine which part of the file comprising the respective mapping definition is read.

The memory size within the data carriers may be limited. For example, upon identifying the size of the data, which is stored within the data carrier together with different kinds of data, management of memory within the data carrier using the mapping definition may be useful. By managing the memory, the types of data, which needs to be stored on the data carrier, may be accounted for. For instance, in case a first piece data has the size of 8 bits and a second piece of data has the size of 3 bits, this may be accounted for in the memory management. Clustering of data on the data carrier, for instance, providing blocks of 8 bits each, may be avoided. Instead of using 16 bits for storing the above-mentioned data, only 8 bits are required. Memory management may therefore reduce the amount of memory needed for storing the required data.

According to further embodiments, definitions of un-clustered memory areas for data within the data carrier are provided. This may allow reducing required memory for storing data on the data carrier.

It might be necessary to change the way data is stored on a data carrier. In such a case, embodiments provide updating the mapping definition, and storing data within the data carrier from a previous format into a new format, according to the updated mapping definition. This may, for example, be useful in case the application using the data on the data carrier changes. In that event, the data on the data carrier might need to be stored or read in a different format. According to embodiments, it may be possible to read data from the data carrier with an old format and to write the data back to the data carrier in a new format.

In case the requirements of memory may change dynamically, embodiments provide adapting memory usage of the data carrier using the mapping definition dynamically. In particular, when the data to be stored on the data carrier changes in size, dynamic adaptation of memory usage might be useful.

To allow accessing the mapping device independently, embodiments provide storage of the mapping definition in the file in a device-independent format. A device-independent format may, for instance, be a markup language, for example, XML or any other markup language. Other device-independent, formally defined languages to describe data may also be possible. Access to such a data is device-independent and may be accounted for within any device, such as a mobile device running the mapping interface as well as the application program. The respective device may run these applications device-independently, for example, with a Java interpreter or any other device-independent interpreter.

To provide information of accessible data to the application, providing a description of accessible data within the data carrier to an application via the database interface is possible according to embodiments. The application may request a description of accessible data from the mapping interface by sending a "describe table" request to the database interface. The mapping interface may retrieve the description from the mapping definition and provide the requesting application with a "describe table" response via the database interface. The application may therefore be informed about accessible data, in particular the accessible field names of available data. Upon identifying the field names, the application may request the respective data using the field names sending appropriate requests in a database query protocol message to the database interface.

According to embodiments, it is possible to receive a database query protocol request from an application to determine a description of accessible data via the database interface, obtain the description of accessible data from the mapping definition, and provide the description of accessible data to the requesting application via the database interface.

According to further embodiments, it is provided to receive a database query protocol request from an application to determine data from a data carrier, map the database query protocol request onto a data carrier query protocol request, and provide the data carrier query protocol request to the wireless interface to interrogate the data carrier. The data carrier may be interrogated to respond to the respective request.

Further embodiments provide receiving data from a data carrier as a data carrier query protocol message via the wireless interface, mapping the data from the data carrier query protocol message into a database query protocol message, and providing the data as a data query protocol message to the database interface. A response of the data carrier upon a data carrier query protocol request may be mapped onto a database query protocol message and provided to the requesting application.

To allow processing data of the data carriers in the same manner as data from a database, providing the data of a data carrier to the database interface formatted as database data is possible according to embodiments. According to embodiments, it is provided to provide data of the data carrier as one row of a database table to the database interface. In addition providing a defined byte area of the data carrier as one column of a respective row to the database interface is possible. The data of one complete tag may be mapped onto one row of a virtual database table. In case several tags with the same format are read simultaneously, several rows may be provided. A column within the row may represent one field in the virtual database table. A column or field may map to a continuous byte area within the tag.

According to embodiments, the data on the data carrier is stored byte-oriented. A certain number of bits may be combined into one byte block. The byte block may account for particular data within the data carrier. This byte block may carry certain data, which may be addressed using an application field name.

Therefore, according to embodiments, providing the data to the database interface application field-oriented is possible. Application field-orientation may result in requesting data by using application field names. A response to such a request would include the application field name. As data within the data carrier may be stored byte-oriented and bytes defining the particular data may be combined into blocks, the data blocks may be accessed using the field names by mapping the field names into the respective byte position.

For accessing data via the wireless interface without regard for the implementation of the wireless interface in the mapping interface, a physical layer access interface for accessing the data carrier via the wireless interface may be provided according to embodiments. A physical layer access interface may provide access to the wireless interface using standardized messages. The method for transporting these messages using the wireless interface may be accounted for within the physical layer access interface. To that end, the mapping interface may be device-independent as well as independent of the protocol used on the wireless interface.

Different data carriers may provide data in different formats. Certain embodiments provide standardizing messages received from the data carrier via the wireless interface into a device-independent format within the physical layer access interface. By standardizing messages into a device-independent format, the mapping interface need not identify which type of wireless interface or data carrier is used. The device, which runs the mapping interface and the physical layer access interface, may provide access to the wireless interface using different modes of communication. Communication between the wireless interface and the physical layer access interface may be device-dependent. To account for this device-dependency, the physical layer access interface may standardize the messages received from the data carrier via the wireless interface.

According to further embodiments, it is provided to format messages received from the mapping interface into a device-specific format within the physical layer access interface. Using standard messages may be allowed within the mapping interface without accounting for different devices for wireless interfaces.

To provide communication between the data carrier and the mapping interface, certain embodiments provide communicating data between the data carrier and the mapping interface via the wireless interface and the physical access interface, and vice versa. Therefore, it may be allowed that messages are directed to and from the data carrier via the wireless interface and the physical access interface.

To provide information about available data carriers within a scan area of the wireless interface, e.g., the area where the radio waves allow interrogating the data carriers, embodiments provide scanning substantially permanently for available data carriers. By substantially permanently scanning the area, all available data carriers may be interrogated.

By providing data of a data carrier via the database interface to an application, once a data carrier is accessible, as provided by certain embodiments, event-driven access to the data may be possible. The application may receive the information about available data and then request the data via the database interface. If data is available, the requests need to be sent to the database interface.

A user- or application-driven access may be possible by scanning for available data carriers upon receiving a request from an application via the database interface. The application may drive the mapping interface to interrogate for data carriers.

To provide controlled access to the data within the data carriers, certain embodiments provide write-protecting memory blocks within the data carrier, to the extent that, by using database query protocol messages, memory areas within the data carrier may be write-protected. Therefore, areas within the data carrier may be write-protected using messages sent to the data carrier via the database interface. The application itself may provide for write-protection.

To provide a mapping definition for various applications, for example, with a mobile device, certain embodiments implement the mapping definition in a device-independent format. The device independent format may be any markup language, such as XML.

According to further embodiments, implementing the mapping between the data carrier query protocol and the database query protocol within the mapping interface is in a device-independent format. The device-independent format may, for example, be object-oriented or Java code.

According to embodiments, writing of data to the data carriers is possible by writing data, which is received via the data interface, to the data carrier.

According to further embodiments, byte converting during mapping the data between the data carrier query protocol and the database query protocol is provided. Byte converting allows accounting for different bytes structures.

According to embodiments, error handling and event handling within the mapping interface is possible. Errors may be accounted for during mapping and receiving data carrier query messages and database query messages. Events may be provided in case certain activities occur.

A further aspect of the invention is a computer system for mapping data between a wirelessly accessible data carrier and a database application, the system comprising a wirelessly accessible data carrier, a mapping device with a mapping interface, a wireless interface for communicating with the data carrier using a data carrier query protocol, a database interface for communicating with a database application using database query protocol, and storing a mapping definition separately from the mapping interface providing separation between the mapping interface and the mapping definition.

According to embodiments, said wirelessly accessible data carrier may be a radio frequency identification tag (RFID), a smart tag, an infrared tag, or any other wireless data carrier.

According to further embodiments, the mapping device may be comprised within a mobile device. Insofar as the mobile device may be a mobile phone, a personal digital assistant (PDA), a mobile terminal, or any other mobile device, asset management using radio frequency tags may be possible using mobile devices.

According to embodiments, an interrogation means within the mapping device for wirelessly accessing said data carrier using said wireless interface is possible. the interrogation means may be any means that allows communicating according to an appropriate communication protocol.

According to other embodiments, inasmuch as the mapping device may store the mapping definition, the mapping definition and the mapping interface may be within one device.

According to embodiments, the data carrier may store the mapping definition.

Another aspect of the invention is a computer program product readable by a computer and embodying a program of instructions capable of mapping data between a wirelessly accessible data carrier and a database application using a mapping interface, the program comprising instructions operable to cause the computer to communicate with the data carrier via a wireless interface using a data carrier query protocol, to communicate with a database application via a database interface using a database query protocol, to read a mapping definition, to exchange data between the wireless interface and the database interface by mapping between the data carrier query protocol and the database query protocol within the mapping interface using the mapping definition, and to store the mapping definition separately from the mapping interface, providing separation between mapping interface and mapping definition.

Referring now to the drawings, in which like numerals represent like elements throughout the several figures, aspects of the present invention and the exemplary operating environment will be described.

BRIEF DESCRIPTION OF THE DRAWINGS

The accompanying drawings, which are incorporated in and constitute a part of this specification, illustrate various embodiments of the invention and, together with the description, serve to explain the principles of the invention. In the drawings:

FIG. 1    illustrates an exemplary computer system that can be used to implement one or more embodiments of the present invention.
FIG. 2A    shows a system in accordance with the invention.
FIG. 2B    shows the system with a low-level interface.
FIG. 3    shows an example of an XML file describing one or more tables and fields of each table.
FIG. 4    shows an example of a table with data tag 6 memory layout.
FIG. 5    shows an example of an XML file with a mapping definition for a memory layout.
FIG. 6    shows an example of an XML file with a mapping definition for different tables within a data tag.
FIG. 7    shows Backus-Naur-Form (BNF) of supported SQL statements for a database interface.
FIG. 8    shows examples of messages for a database interface in SQL.
FIGS. 9    illustrates a method for accessing data stored on a data tag.
FIGS. 10    illustrates another method for accessing data stored on a data tag.

DETAILED DESCRIPTION

Methods and systems consistent with the principles of the present invention enable mapping data between a wirelessly accessible data carrier and a database application.

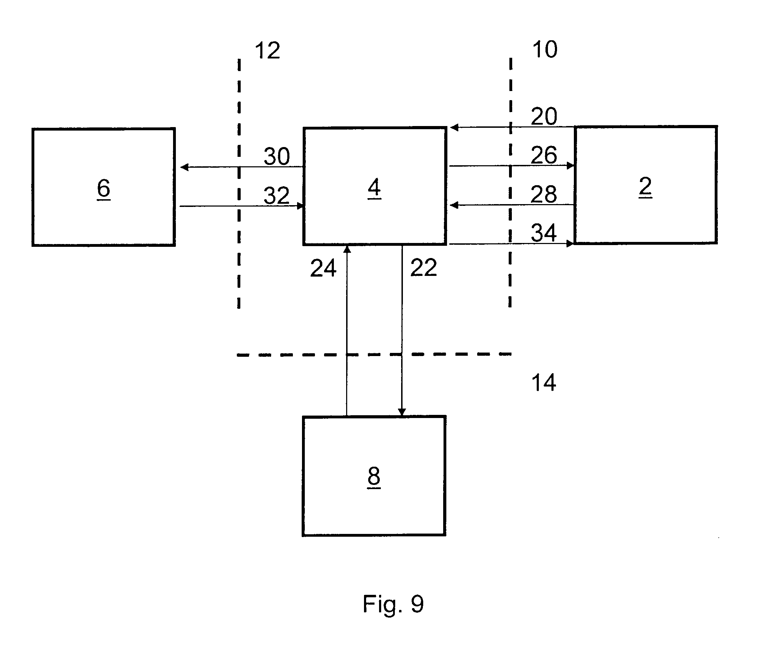

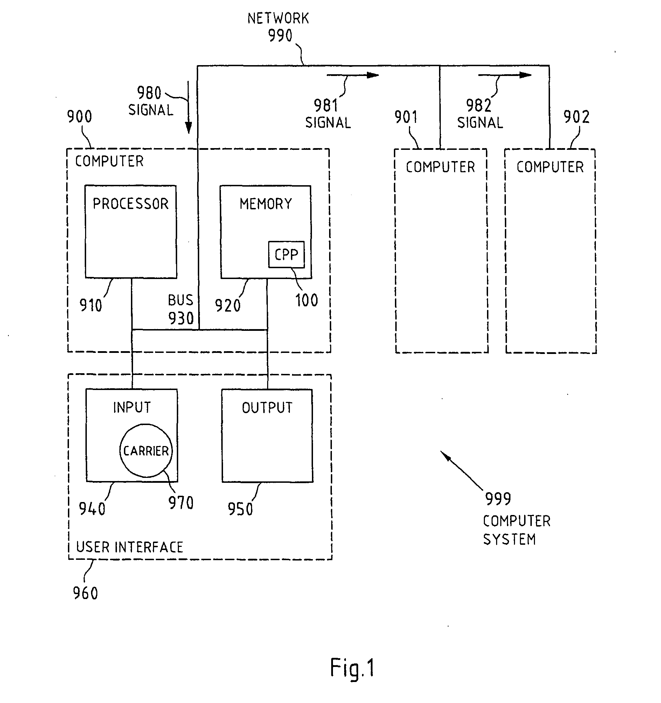

In FIG. 1, while similar reference numbers (e.g., 100/200, 110/210, etc.) denote similar elements, the function of these elements can be different.

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. With respect to computer 900, computer 901/902 is sometimes referred to as a "remote computer." Computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like. Processor 910 is, for example, a central processing unit (CPU), a micro-controller unit (MCU), a digital signal processor (DSP), or the like.

Memory 920 comprises elements that temporarily or permanently store data and instructions. Although memory 920 is illustrated as part of computer 900, memory can also be implemented in network 990, in computers 901/902 in processor 910 itself (e.g., cache, register), or elsewhere. Memory 920 can be read-only memory (ROM), random access memory (RAM), or memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, or a memory stick.

Optionally, memory 920 may be distributed. Portions of memory 920 can be removable or non-removable. For reading from media and for writing in media, computer 900 uses well-known devices, for example, disk drives or tape drives.

Memory 920 may store modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and, optionally, data that cause processor 910 to execute method steps of the present invention. In other words, CPP 100 can control the operation of computer 900 and its interaction in network system 999 so that it operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals comprise computer program products (CPP) to be executed by further processors in computers 901 and 902.

Input device 940 provides data and instructions for processing by computer 900. Device 940 may be, for instance, a keyboard, a pointing device (e.g., mouse, trackball, cursor direction keys), a microphone, a joystick, a game pad, a scanner, a disc drive, or any other input device. Although the examples are devices with human interaction, device 940 can also be a device without human interaction, such as, for example, a wireless receiver (e.g., with satellite dish or terrestrial antenna), a sensor (e.g., a thermometer), or a counter (e.g., a goods counter in a factory). Input device 940 can serve to read carrier 970.

Output device 950 presents instructions and data that have been processed. For example, this can be a monitor or a display, cathode ray tube (CRT), flat panel display, liquid crystal display (LCD), speaker, printer, plotter, or vibration alert device. Output device 950 can communicate with the user, but it can also communicate with further computers.

Input device 940 and output device 950 can be combined into a single device. Any device 940 and 950 can be provided optionally.

Bus 930 and network 990 provide logical and connections by conveying instruction and data signals. While connections inside computer 900 are conveniently referred to as "bus 930", connections between computers 900-902 are referred to as "network 990". Optionally, network 990 includes gateways, which are computers that specialize in data transmission and protocol conversion.

Devices 940 and 950 are coupled to computer 900 by bus 930 (as illustrated) or by network 990 (optionally). While the signals inside computer 900 are mostly electrical signals, the signals in network 990 are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN); a wide area network (WAN); a public switched telephone network (PSTN); an Integrated Services Digital Network (ISDN); an infrared (IR) link; a radio link such as Universal Mobile Telecommunications System (UMTS), Global System for Mobile Communication (GSM), Code Division Multiple Access (CDMA); or a satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), and Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides" are convenient abbreviation to express actions by a computer that are controlled by a program.

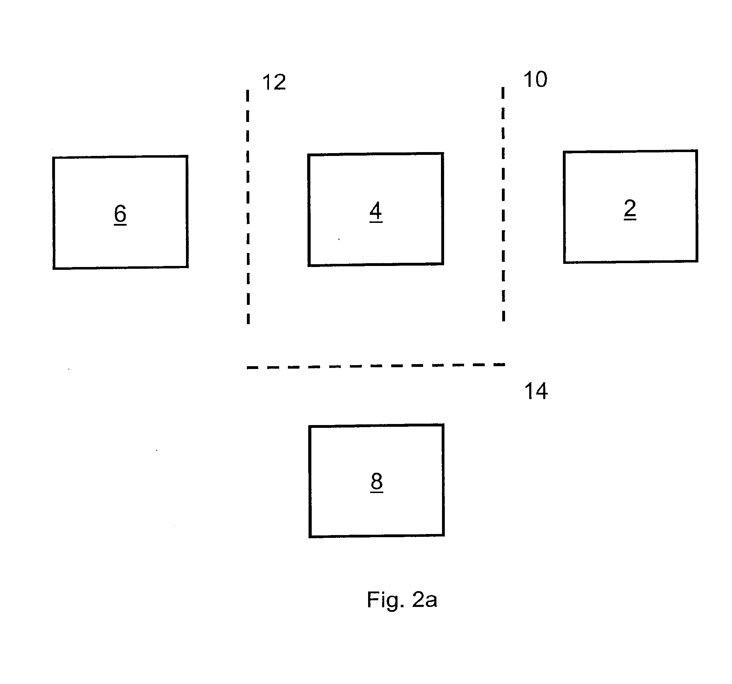

FIG. 2A shows a system in accordance with the invention. Shown are an application 2, a mapping interface 4, a data tag 6, and a mapping definition 8. A database interface 10 is provided between database application 2 and mapping interface 4. A wireless interface 12 is provided between mapping interface 4 and data tag 6. Further, a communication channel 14 is provided between mapping interface 4 and mapping definition 8.

The application 2 supports field-oriented data. That is, the application 2 can access data stored in a database by using database query protocol messages. The application can be, for example, one of the above described applications that uses a database. The application 2 can be stored on and executed by a front end computing device, which can be a mobile device, as will be further described below. There can be more than one application. The application can be a mobile application. In one implementation, the application is Mobile Asset Management, available from SAP AG, of Walldorf, Germany.

The data tag 6 can be placed on a real world object and can carry data about these objects. These objects may, for instance, be labels for products, identification cards, access cards, transportation tickets, event tickets, vehicles, machines, materials or any other real world objects, for which data needs to be processed within an application. The system can support multiple tags and, furthermore, different types of tags.

A database interface 10 allows communicating using a database queries, for example SQL. Wireless interface 12 allows communicating using data carrier access queries, for example according to ISO 15961 or ISO 15962. Communication between mapping means 4 and mapping definition 8 is possible using any communication protocol, such as TCP/IP, FTP, file streams, or any other communication means. A mapping means may be any mapping interface, software based or hardware based.

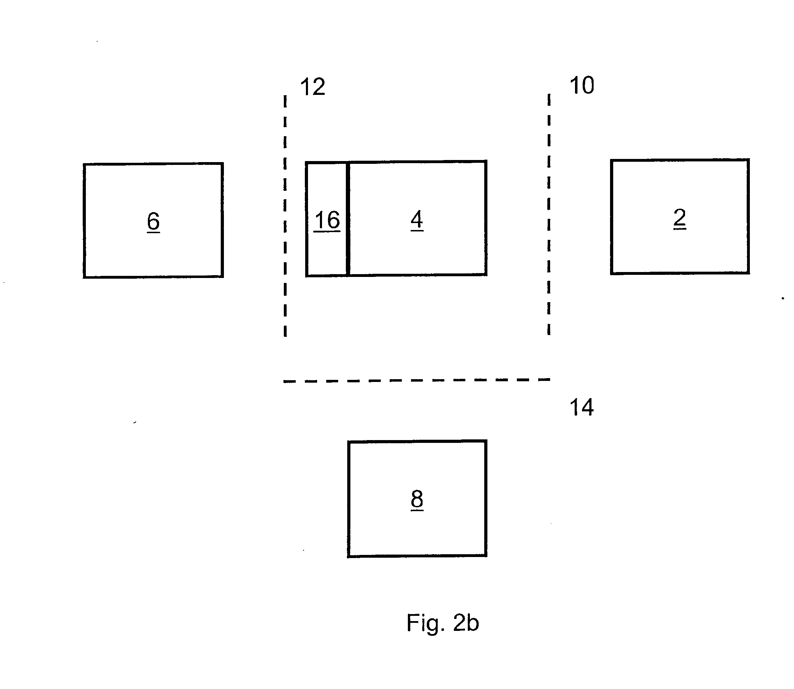

FIG. 2b depicts the system according to FIG. 2a with an additional low-level interface. Low-level interface 16 may be a physical layer access interface. The low-level interface, located between the data carrier 6 and the mapping means 4 allows standardizing the data from data carrier 6 into a device-independent format. In one embodiment, mapping means 4 may use Java database connectivity API. Mapping means 4 may provide JDBC commands, calling the low-level interface 16 with the appropriate parameters, thus providing communication via wireless interface 12.

The mapping definition 8 provides a mapping between the database queries and the wireless interface queries. The mapping definition defines how to map messages between the data tag query protocol and the database query protocol. By mapping these messages, data can be exchanged between the wireless interface 12 and the database interface 10. Mapping allows the system to use database query protocol messages sent to the database interface to access the data within the data tags.

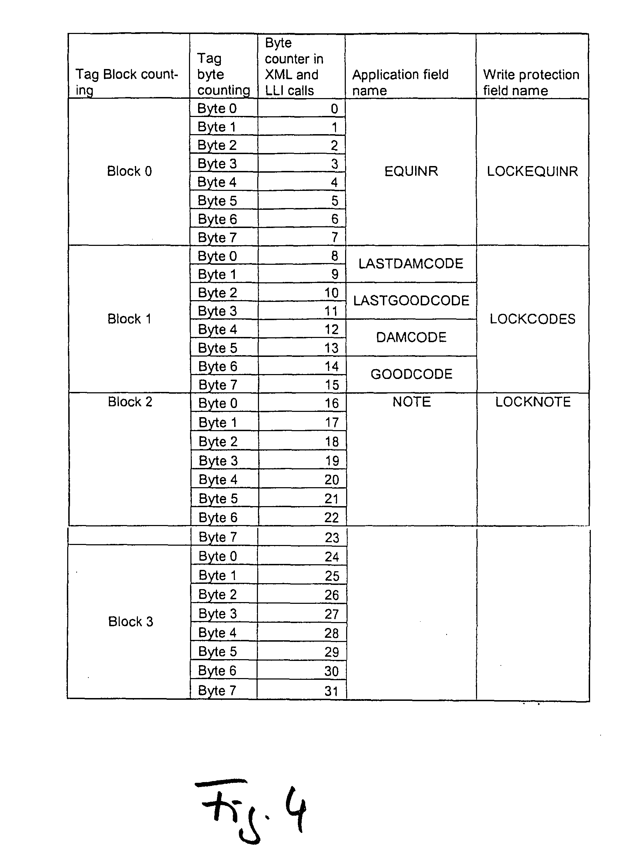

The mapping definition 8 may provide mapping information for mapping of certain data blocks within data carrier 6 onto application fields, which may be read by data application 2. One exemplary implementation of mapping definition 8 is depicted in FIG. 4.

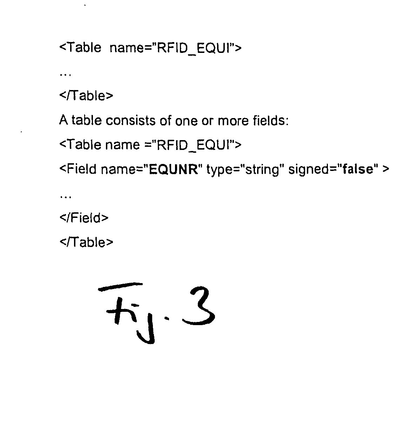

FIG. 3 is an XML file describing one or more tables and fields of each table. For each field the mapping to the physical bytes on the data carrier 6 is given. For each field the mapping to the physical bytes of data carrier 6 may be shown for example by

*<RFID startbyte="2" lengths="15" encoding="string"/>*.

In the XML file, there is always one constant entry for each table. This constant entry may describe the unique tag identification, provided by the chip manufacturer. Such an ID may be

*<Identifier name="ID" type="string">*

*</Identifier>*

These fields may automatically be mapped from the data carrier 6 to the database 4 with the mapping definition 8.

FIG. 4 depicts a table with an exemplary data carrier 6 memory layout as well as application field names and write-protection field names. As shown, bytes within the data carrier 6 may be combined into blocks. Block 0 comprises, for example, bytes 0-7. Block 1 may comprise bytes 8-15, block 2 may comprise bytes 16-23, and block 3 may comprise bytes 24-31. For each block, the bytes may be counted from 0-7. The mapping definition 8 allows, for instance, mapping the consecutive byte numbers onto the respective application field name. For instance, bytes 0-7 may be mapped by mapping definition 8 onto application field name *"EQUINR"*. Bytes 8-9 may be mapped onto application field name *"LASTDAMCODE"*. Further mapping of bytes to application field names may be seen in FIG. 4.

According to embodiments, write-protection may also be used within database carrier 6. According to certain embodiments, the data may be organized according to requirements of the application. Therefore, memory organization may be done by mapping definition 8.

To support write-protection via the JDBC interface, a database field mapping may be provided, to access certain bytes. It may be possible to cluster several database fields to write-protection fields, realizing the memory block boundaries. In an XML configuration file, all field names may be enclosed by *</Protection area>* tags. If the start tags contain a name, the fields inside the *<protection area>* tag may be write-protected.

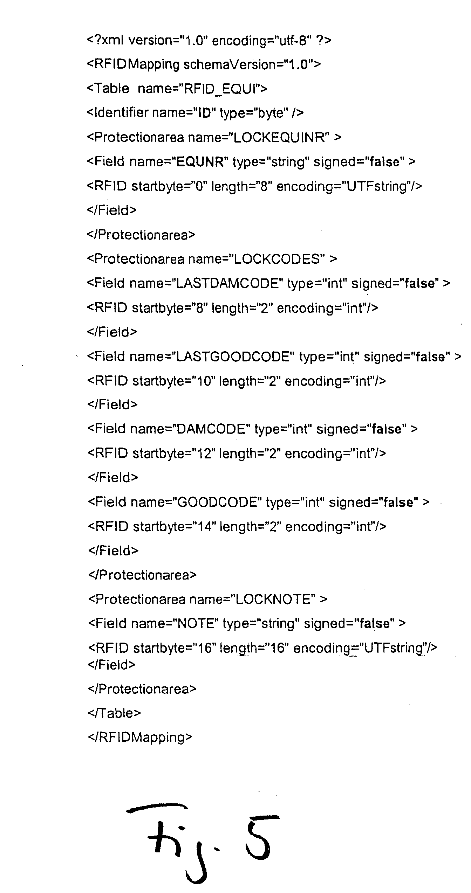

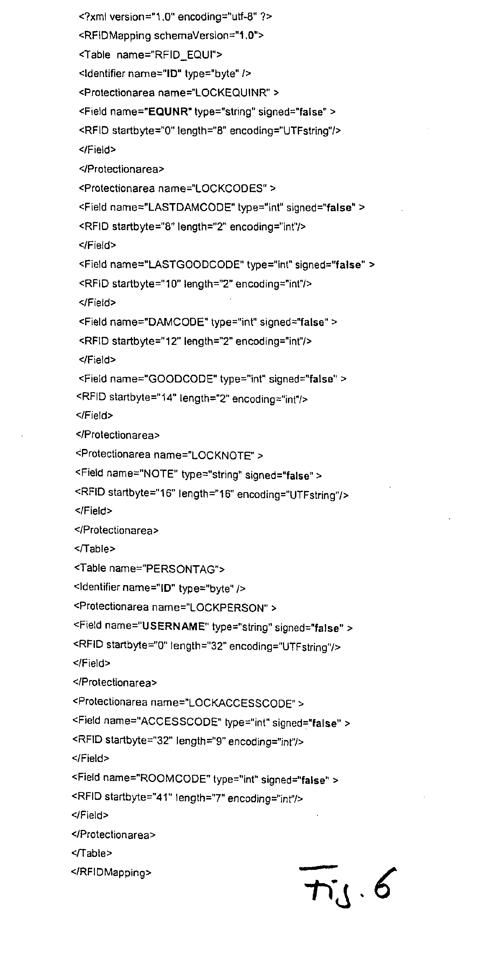

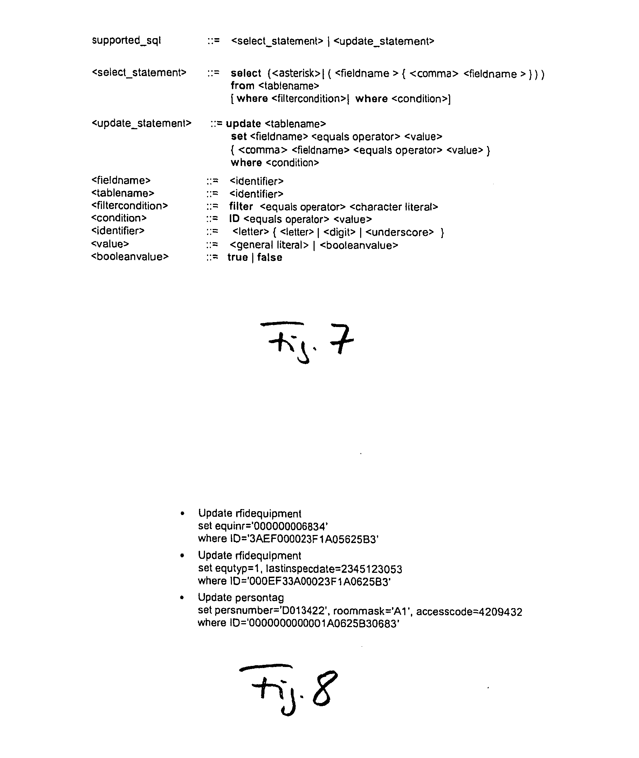

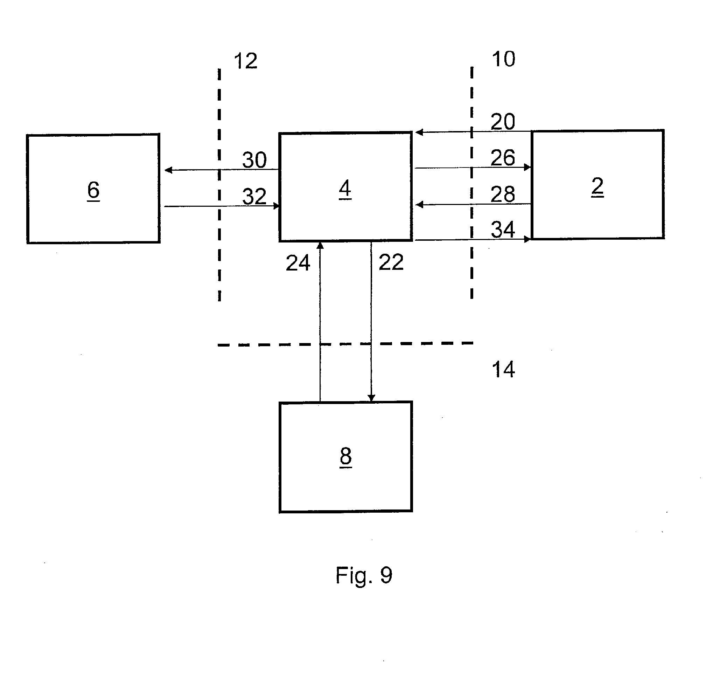

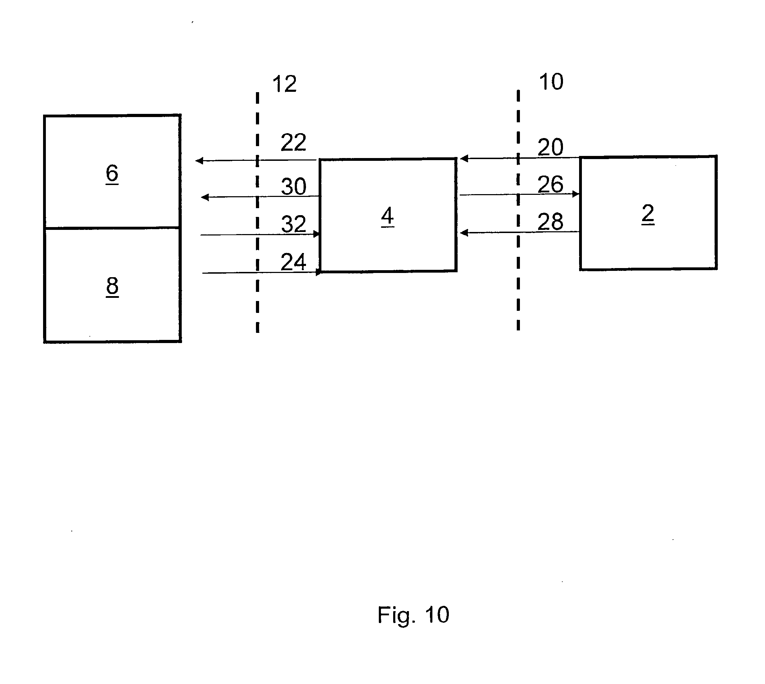

For instance the tag *<protection area name="LOCKEQUINR">* may be write-protected by the command update *<table_name> set LOCKEQUINR=true*.

In case the write-protection in an update command is used, all fields mentioned in that particular command may be updated and write-protected independently of the order of the field names.

FIG. 5 depicts an exemplary XML file with a mapping definition for a memory layout according to FIG. 4.

In FIG. 6, a mapping definition for different tables within a data carrier 6 is shown. As can be seen, two different tags *<table_name="string">*, for example *"RFID_EQUI"* and *"PERSONTAG"* are the table names which are supported by the mapping definition 8 as depicted in FIG. 6.

It may also be possible to support changes in the memory of a data carrier 6 during its lifetime. Different data carrier 6 types with different storage capacity may also be supported. The different formats may be realized within several SQL table statements, as depicted in FIG. 7.

FIG. 7 depicts a Backus-Naur-Form (BNF) of supported SQL statements for database interface 10. Examples of messages for database interface 10 are for instance

*select <field_names> from <table_names> where filter=tag type*

This method may allow reading all necessary bytes from all available tags. It may also allow mapping the bytes to the defined mapping and giving the the initiating application of this method the result list with the corresponding fields.

If more than one data carrier 6 is available, all data carrier 6 data may be given to the caller via several rows of a virtual table using database interface 10. A calling application may then decide which table name to use. All information may be mapped according to mapping definition 8.

The tag *<field names>* may require at least one field name. More field names may also be allowed. A *<where>* clause with a special term *"filter"* may also be allowed. The value of the filter may directly be mapped to the low-level interface 16.

Another exemplary method supported may be

update *<table_name> said <field_name> ="value" where ID="XYZ"*

This command may provide updating one or more fields within a data carrier 6 named "XYZ". It may always be necessary to fully qualify the complete field names and give a *"where"* clause with complete keys. Examples of such commands are depicted in FIG. 8.

FIG. 9 shows a method for accessing data on a data carrier 6 according to embodiments. Database application 2 requests a description of tables to database interface 10 with a respective request message 20. Mapping means 4 receives the request and sends request 22 to mapping definition 8 to respond with the respective table names. Mapping definition 8 responds with a message 24 comprising the available table names. The description of the table names and field names comprised in this message may be stored in mapping means 4 for further processing.

Additionally, mapping means 4 may send a message 26 via database interface 10 to database application 2 comprising the table definitions and field names for the respective tables. The database application 2 then knows which tables are available and which are the field names.

For accessing data, database application 2 may request data of a particular field of a particular table using a database query 28. Mapping means 4 sends the request 30 to data carrier 6 via wireless interface 12 requesting the respective data . Data carrier 6 responds with a message 32 via wireless interface 12 comprising the available data. Mapping means 4 maps the data from the data carrier 6 onto a message 34 according to the database query protocol and sends this message via database interface 10 to database application 2.

FIG. 10 shows a similar method as shown in FIG. 9. However, according to FIG. 10, the mapping definition 8 may be stored within data carrier 6. Therefore, messages 22, 24 may be transmitted via wireless interface 12, rather than via interface 14.

The invention and all of the functional operations described in this specification can be implemented in digital electronic circuitry, or in computer software, firmware, or hardware, including the structural means disclosed in this specification and structural equivalents thereof, or in combinations of them. The invention can be implemented as one or more computer program products, i.e., one or more computer programs tangibly embodied in an information carrier, e.g., in a machine-readable storage device or in a propagated signal, for execution by, or to control the operation of, data processing apparatus, e.g., a programmable processor, a computer, or multiple computers. A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described herein, including the method steps of the invention, can be performed by one or more programmable processors executing one or more computer programs to perform functions of the invention by operating on input data and generating output. The processes and logic flows can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

The invention can be implemented in a computing system that includes a back-end component (e.g., a data server), a middleware component (e.g., an application server), or a front-end component (e.g., a client computer having a graphical user interface or a Web browser through which a user can interact with an implementation of the invention), or any combination of such back-end, middleware, and front-end components. The components of the system can be interconnected by any form or medium of digital data communication, e.g., a communication network. Examples of, communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The invention has been described in terms of particular embodiments, but other embodiments can be implemented and are within the scope of the following claims. For example, the operations of the invention can be performed in a different order and still achieve desirable results. As one example, the process depicted in FIGS. 9, and 10 may not require the particular order shown, or sequential order, to achieve desirable results. In certain implementations, multitasking and parallel processing may be preferable. Other embodiments are within the scope of the following claims

REFERENCE NUMBERS

**[0114]**

| | |
|---|---|
| 2 | database application |
| 4 | mapping means |
| 6 | data carrier |
| 8 | mapping definition |
| 10 | database interface |
| 12 | wireless interface |
| 14 | communication channel |
| 16 | low-level interface |
| 20 | request describe table |
| 22 | read available tables |
| 24 | send available tables |
| 26 | respond describe table |
| 28 | request data |
| 30 | read data |
| 32 | send data |
| 34 | respond data |
| 100 | computer program product |
| 900 | computer |
| 910 | processor |
| 920 | memory |
| 930 | bus |
| 940 | input device |
| 950 | output device |
| 960 | user interface |
| 970 | program carrier |
| 980 | program signal |
| 990 | computer network |
| 999 | computer network system |

**Claims**

1. A computer-implemented method for mapping data between a wirelessly accessible data carrier, and a database application using a mapping interface, comprising:

   - communicating with the data carrier via a wireless interface using a data carrier query protocol;
   - communicating with a database application via a database interface using a database query protocol;
   - reading a mapping definition;
   - exchanging data between the wireless interface and the database interface by mapping between the data carrier query protocol and the database query protocol within the mapping interface using the mapping definition; and,
   - storing the mapping definition separately from the mapping interface, providing separation between mapping interface and mapping definition.

2. The computer-implemented method of claim 1, **characterized by** storing the mapping definition within the data carrier.

3. The computer-implemented method of claim 2, **characterized by** storing the mapping definition in a separate memory area of the data carrier.

4. The computer-implemented method of claim 1, **characterized by** storing the mapping definition in a file.

5. The computer-implemented method of claim 4, **characterized by** storing various mapping definitions representing different types of data carriers within the file.

6. The computer-implemented method of claim 1, **characterized by** providing management of memory within the data carrier using the mapping definition.

7. The computer-implemented method of claim 1, **characterized by** defining un-clustered memory areas for data within the data carrier.

8. The computer-implemented method of claim 1, **characterized by** updating the mapping definition and storing data within the data carrier from a previous format into a new format according to the updated mapping definition.

9. The computer-implemented method of claim 1, **characterized by** dynamically adapting memory usage of the data carrier using the mapping definition.

10. The computer-implemented method of claim 1, **characterized by** storing the mapping definition in the file in a device-independent format.

11. The computer-implemented method of claim 1, **characterized by** providing a description of accessible data within the data carrier to an application via the database interface.

12. The computer-implemented method of claim 1, **characterized by** receiving a database query protocol request from an application to determine a description of accessible data via the database interface, obtaining the description of accessible data from the mapping definition, and providing the description of accessible data to the requesting application via the database interface.

13. The computer-implemented method of claim 1, **characterized by** receiving a database query protocol request from an application to determine data from a data carrier, mapping the database query protocol request onto a data carrier query protocol request, and providing the data carrier query protocol request to the wireless interface to interrogate the data carrier.

14. The computer-implemented method of claim 1, **characterized by** receiving data from a data carrier as data carrier query protocol message via the wireless interface, mapping the data from the data carrier query protocol message into a database query protocol message, and providing the data as a database query protocol message to the database interface.

15. The computer-implemented method of claim 1, **characterized by** providing the data of a data carrier to the database interface formatted as database data.

16. The computer-implemented method of claim 15, **characterized by** providing data of the data carrier as one row of a database to the database interface.

17. The computer-implemented method of claim 15, **characterized by** providing a defined byte area of the data carrier as one column of a respective row to the database interface.

18. The computer-implemented method of claim 1,
    **characterized by** storing byte-oriented data on the data carrier.

19. The computer-implemented method of claim 1, **characterized by** providing field-oriented data to the database interface application.

20. The computer-implemented method of claim 1, **characterized by** providing a physical layer access interface for accessing the data carrier via the wireless interface.

21. The computer-implemented method of claim 20, **characterized by** normalizing messages received from the data carrier via the wireless interface into a device-independent format within the physical layer access interface.

22. The computer-implemented method of claim 20, **characterized by** formatting messages received from the mapping interface into a device-specific format within the physical layer access interface.

23. The computer-implemented method of claim 20, **characterized by** communicating data between the data carrier and the mapping interface via the wireless interface and the physical access interface, and vice versa.

24. The computer-implemented method of claim 1, **characterized by** scanning substantially permanently for available data carriers.

25. The computer-implemented method of claim 1, **characterized by** providing data of a data carrier via the database interface to an application, once a data carrier is accessible.

26. The computer-implemented method of claim 1, **characterized by** scanning for available data carriers upon receiving a request from an application via the database interface.

27. The computer-implemented method of claim 1, **characterized by** write-protecting memory blocks within the data carrier, such that, by using database query protocol messages, memory areas within the data carrier are write-protectable.

28. The computer-implemented method of claim 1, **characterized by** implementing the mapping definition in a device-independent format.

29. The computer-implemented method of claim 1, **characterized by** implementing the mapping between the data carrier query protocol and the database query protocol within the mapping interface in a device-independent format.

30. The computer-implemented method of claim 1, **characterized by** writing data, which is received via the database interface, to the data carrier.

31. The computer-implemented method of claim 1, **characterized by** providing byte converting when mapping the data between the data carrier query protocol and the database query protocol.

32. The computer-implemented method of claim 1, **characterized by** providing error handling within the mapping interface.

33. The computer-implemented method of claim 1, **characterized by** providing event handling within the mapping interface.

34. A computer system for mapping data between a wirelessly accessible data carrier and a database application, in particular for implementing a method of any one of claims 1 to 33, comprising:

   - a wirelessly accessible data carrier;
   - a mapping device with a mapping interface, a wireless interface for communicating with the data carrier using a data carrier query protocol, and a database interface for communicating with a database application using database query protocol; and,
   - a storage separated from said mapping interface for storing a mapping definition separately from the mapping interface providing separation between mapping interface and mapping definition.

35. A computer program product readable by a computer and embodying a program of instructions capable of mapping data between a wirelessly accessible data carrier, and a database application using a mapping interface, in particular for implementing a method of any one of claims 1 to 33, the program comprising instructions operable to cause the computer to perform:

- communicating with the data carrier via a wireless interface using a data carrier query protocol,
- communicating with a database application via a database interface using a database query protocol,
- reading a mapping definition,
- exchanging data between the wireless interface and the database interface by mapping between the data carrier query protocol and the database query protocol within the mapping interface using the mapping definition, and
- storing the mapping definition separately from the mapping interface, providing separation between mapping interface and mapping definition.

Fig. 9

EP 1 610 232 A1

NETWORK
990

980
SIGNAL

900

COMPUTER

PROCESSOR

910

BUS
930

MEMORY

CPP

920    100

981
SIGNAL

901

COMPUTER

982
SIGNAL

902

COMPUTER

INPUT

CARRIER

940    970

OUTPUT

950

USER INTERFACE

960

999
COMPUTER
SYSTEM

Fig.1

EP 1 610 232 A1

```
┌─────────┐
│    2    │
└─────────┘

┌─────────┐
│    4    │
└─────────┘

┌─────────┐
│    6    │
└─────────┘

┌─────────┐
│    8    │
└─────────┘
```

10        12        14

Fig. 2a

Fig. 2b

6

8

16

4

12

14

10

2

.

```
<Table  name="RFID_EQUI">
...
</Table>
```

A table consists of one or more fields:

```
<Table name ="RFID_EQUI">
<Field name="EQUNR" type="string" signed="false" >
...
</Field>
</Table>
```

Fig. 3

| Tag Block counting | Tag byte counting | Byte counter in XML and LLI calls | Application field name | Write protection field name |
|---|---|---|---|---|
| Block 0 | Byte 0 | 0 | EQUINR | LOCKEQUINR |
| | Byte 1 | 1 | | |
| | Byte 2 | 2 | | |
| | Byte 3 | 3 | | |
| | Byte 4 | 4 | | |
| | Byte 5 | 5 | | |
| | Byte 6 | 6 | | |
| | Byte 7 | 7 | | |
| Block 1 | Byte 0 | 8 | LASTDAMCODE | LOCKCODES |
| | Byte 1 | 9 | | |
| | Byte 2 | 10 | LASTGOODCODE | |
| | Byte 3 | 11 | | |
| | Byte 4 | 12 | DAMCODE | |
| | Byte 5 | 13 | | |
| | Byte 6 | 14 | GOODCODE | |
| | Byte 7 | 15 | | |
| Block 2 | Byte 0 | 16 | NOTE | LOCKNOTE |
| | Byte 1 | 17 | | |
| | Byte 2 | 18 | | |
| | Byte 3 | 19 | | |
| | Byte 4 | 20 | | |
| | Byte 5 | 21 | | |
| | Byte 6 | 22 | | |
| | Byte 7 | 23 | | |
| Block 3 | Byte 0 | 24 | | |
| | Byte 1 | 25 | | |
| | Byte 2 | 26 | | |
| | Byte 3 | 27 | | |
| | Byte 4 | 28 | | |
| | Byte 5 | 29 | | |
| | Byte 6 | 30 | | |
| | Byte 7 | 31 | | |

Fig. 4

```
<?xml version="1.0" encoding="utf-8" ?>
<RFIDMapping schemaVersion="1.0">
<Table  name="RFID_EQUI">
<Identifier name="ID" type="byte" />
<Protectionarea name="LOCKEQUINR" >
<Field name="EQUNR" type="string" signed="false" >
<RFID startbyte="0" length="8" encoding="UTFstring"/>
</Field>
</Protectionarea>
<Protectionarea name="LOCKCODES" >
<Field name="LASTDAMCODE" type="int" signed="false" >
<RFID startbyte="8" length="2" encoding="int"/>
</Field>
<Field name="LASTGOODCODE" type="int" signed="false" >
<RFID startbyte="10" length="2" encoding="int"/>
</Field>
<Field name="DAMCODE" type="int" signed="false" >
<RFID startbyte="12" length="2" encoding="int"/>
</Field>
<Field name="GOODCODE" type="int" signed="false" >
<RFID startbyte="14" length="2" encoding="int"/>
</Field>
</Protectionarea>
<Protectionarea name="LOCKNOTE" >
<Field name="NOTE" type="string" signed="false" >
<RFID startbyte="16" length="16" encoding="UTFstring"/>
</Field>
</Protectionarea>
</Table>
</RFIDMapping>
```

Fig. 5

```xml
<?xml version="1.0" encoding="utf-8" ?>
<RFIDMapping schemaVersion="1.0">
<Table  name="RFID_EQUI">
<Identifier name="ID" type="byte" />
<Protectionarea name="LOCKEQUINR" >
<Field name="EQUNR" type="string" signed="false" >
<RFID startbyte="0" length="8" encoding="UTFstring"/>
</Field>
</Protectionarea>
<Protectionarea name="LOCKCODES" >
<Field name="LASTDAMCODE" type="int" signed="false" >
<RFID startbyte="8" length="2" encoding="int"/>
</Field>
<Field name="LASTGOODCODE" type="int" signed="false" >
<RFID startbyte="10" length="2" encoding="int"/>
</Field>
<Field name="DAMCODE" type="int" signed="false" >
<RFID startbyte="12" length="2" encoding="int"/>
</Field>
<Field name="GOODCODE" type="int" signed="false" >
<RFID startbyte="14" length="2" encoding="int"/>
</Field>
</Protectionarea>
<Protectionarea name="LOCKNOTE" >
<Field name="NOTE" type="string" signed="false" >
<RFID startbyte="16" length="16" encoding="UTFstring"/>
</Field>
</Protectionarea>
</Table>
<Table name="PERSONTAG">
<Identifier name="ID" type="byte" />
<Protectionarea name="LOCKPERSON" >
<Field name="USERNAME" type="string" signed="false" >
<RFID startbyte="0" length="32" encoding="UTFstring"/>
</Field>
</Protectionarea>
<Protectionarea name="LOCKACCESSCODE" >
<Field name="ACCESSCODE" type="int" signed="false" >
<RFID startbyte="32" length="9" encoding="int"/>
</Field>
<Field name="ROOMCODE" type="int" signed="false" >
<RFID startbyte="41" length="7" encoding="int"/>
</Field>
</Protectionarea>
</Table>
</RFIDMapping>
```

Fig. 6

```
supported_sql        ::=  <select_statement> | <update_statement>

<select_statement>   ::=  select (<asterisk>| ( <fieldname > { <comma> <fieldname > } ) )
                          from <tablename>
                          [ where <filtercondition>| where <condition>]

<update_statement>   ::= update <tablename>
                          set <fieldname> <equals operator> <value>
                          { <comma> <fieldname> <equals operator> <value> }
                          where <condition>

<fieldname>          ::=  <identifier>
<tablename>          ::=  <identifier>
<filtercondition>    ::=  filter  <equals operator> <character literal>
<condition>          ::=  ID <equals operator> <value>
<identifier>         ::=   <letter> { <letter> | <digit> | <underscore> }
<value>              ::=  <general literal> | <booleanvalue>
<booleanvalue>       ::=  true | false
```

Fig. 7

- Update rfidequipment
  set equinr='000000006834'
  where ID='3AEF000023F1A05625B3'

- Update rfidequipment
  set equtyp=1, lastinspecdate=2345123053
  where ID='000EF33A00023F1A0625B3'

- Update persontag
  set persnumber='D013422', roommask='A1', accesscode=4209432
  where ID='0000000000001A0625B30683'

Fig. 8

Fig. 9

EP 1 610 232 A1

Fig. 10

**European Patent Office**

**EUROPEAN SEARCH REPORT**

Application Number

EP 04 01 4443

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 172 596 B1 (COFINO THOMAS ANTHONY ET AL) 9 January 2001 (2001-01-09) * the whole document * ----- | 1-35 | G06F17/30 G06K7/00 |
| X | US 6 400 272 B1 (MOCK JEFF ET AL) 4 June 2002 (2002-06-04) * column 1, line 59 - column 2, line 40 * * column 3, line 57 - column 4, line 12 * * column 5, line 64 - column 6, line 42 * * column 7, line 42 - column 9, line 42 * * column 10, line 4 - column 10, line 17 * * column 13, line 64 - column 14, line 24 * ----- | 1,4,5,8, 10-35 | |
| A | US 2003/141985 A1 (HALLER STEPHAN ET AL) 31 July 2003 (2003-07-31) * page 1, paragraph 20 - page 2, paragraph 22 * * page 3, paragraph 39 * * page 5, paragraph 88 * * page 6, paragraph 99 - paragraph 100 * ----- | 1-35 | |
| A | WO 00/07121 A (PRC INC) 10 February 2000 (2000-02-10) * the whole document * ----- | 1-3, 11-35 | **TECHNICAL FIELDS SEARCHED (Int.Cl.7)** G06F G06K |

The present search report has been drawn up for all claims

| Place of search | Date of completion of the search | Examiner |
|---|---|---|
| The Hague | 23 November 2004 | Abbing, R |

**ANNEX TO THE EUROPEAN SEARCH REPORT
ON EUROPEAN PATENT APPLICATION NO.**                EP 04 01 4443

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2004

| Patent document cited in search report | | Publication date | Patent family member(s) | | Publication date |
|---|---|---|---|---|---|
| US 6172596 | B1 | 09-01-2001 | US | 5673037 A | 30-09-1997 |
| | | | DE | 69530547 D1 | 05-06-2003 |
| | | | DE | 69530547 T2 | 26-02-2004 |
| | | | EP | 0702323 A2 | 20-03-1996 |
| | | | JP | 3017994 B2 | 13-03-2000 |
| | | | JP | 8086863 A | 02-04-1996 |
| | | | KR | 204748 B1 | 15-06-1999 |
| | | | SG | 34973 A1 | 01-02-1997 |
| | | | US | 6812852 B1 | 02-11-2004 |
| | | | US | 2002118097 A1 | 29-08-2002 |
| | | | US | 5942987 A | 24-08-1999 |
| US 6400272 | B1 | 04-06-2002 | US | 2001027439 A1 | 04-10-2001 |
| US 2003141985 | A1 | 31-07-2003 | AU | 1055602 A | 18-06-2002 |
| | | | CA | 2398294 A1 | 13-06-2002 |
| | | | WO | 0247014 A1 | 13-06-2002 |
| | | | EP | 1342204 A1 | 10-09-2003 |
| | | | JP | 2004515861 T | 27-05-2004 |
| WO 0007121 | A | 10-02-2000 | US | 2002084889 A1 | 04-07-2002 |
| | | | AU | 5007399 A | 21-02-2000 |
| | | | WO | 0007121 A1 | 10-02-2000 |

EPO FORM P0459

For more details about this annex : see Official Journal of the European Patent Office, No. 12/82